# EUROPEAN PATENT APPLICATION

(11) **EP 2 434 663 A1**
(43) Date of publication of application: **28.03.2012**
(21) Application number: 10777362.4
(22) Date of filing: 18.05.2010
(51) Int. Cl.: H04B 10/00

(54) **METHOD FOR AMPLIFYING BURST OPTICAL SIGNAL, BURST OPTICAL AMPLIFIER AND SYSTEM, AND COMMUNICATION SYSTEM**

(30) Priority: 22.05.2009 CN 200910085507; 27.07.2009 CN 200910151155
(71) Applicant: Huawei Technologies Co., Ltd., Shenzhen, Guangdong 518129 (CN)
(72) Inventor: LIU, Hong, Shenzhen Guangdong 518129 (CN); DING, Feng, Shenzhen Guangdong 518129 (CN)
(74) Representative: Epping - Hermann - Fischer
(86) International application number: PCT/CN2010/072862
(87) International publication number: WO 2010/133159

(57) **Abstract**

A method for amplifying a burst optical signal, a burst optical amplifier and system, and a communications system are provided according to embodiments of the present invention. The method for amplifying a burst optical signal includes: combining, by a combiner, auxiliary light and signal light into mixed light and outputting the mixed light, where the auxiliary light is non-burst light, the signal light is burst light, and power of the auxiliary light is set to be independent from power of the signal light; generating pump light; and combining, by an optical wavelength division multiplexer, the pump light with the mixed light and inputting the combined light into a gain medium, so as to obtain amplified mixed light. In the above method for amplifying a burst optical signal, a burst optical amplifier, and a communications system, because the auxiliary light always exists, the burst optical amplifier always operates in a state of amplifying light. The pump light exists in the gain medium, and the pump light may directly amplify the entered signal light, thereby reducing the delay time of enabling the burst optical amplifier, improving the transient response speed of the burst optical amplifier, and preventing the generation of a surge phenomenon, so as to prevent the generation of signal distortion.

## Description

### FIELD OF THE INVENTION

The present invention relates to the field of communications technologies, and in particular, to a method for amplifying a burst optical signal, a burst optical amplifier and system, and a communications system.

### BACKGROUND OF THE INVENTION

With the rapid development of communications technologies, the Passive Optical Network (PON) technology is one of the most widely used Fiber To The Home (FTTH) technologies in access networks. PONs of different types have basically the same network architecture, which includes an Optical Line Terminal (OLT), an Optical Network Unit (ONU), and an Optical Distribution Network (ODN). The OLT is located in a central office, and the ONU is located at the home of a user, on the roadside, or in a mansion. The OLT and the ONU are connected by a passive ODN. The OLT and the ODN are connected by a backbone optical fiber. The ODN implements point-to-multipoint optical power distribution, and is connected to a plurality of ONUs through multiple branch optical fibers. A direction from the OLT to the ONU is referred to as a downlink direction, and a direction from the ONU to the OLT is referred to as an uplink direction.

The point-to-multipoint tree topology structure of the PON determines that each ONU must communicate with the OLT by sharing the media. A downlink signal of the OLT is broadcast to all ONUs in a Time Division Multiplex (TDM) manner. A special identity is used to indicate to which corresponding ONU each timeslot belongs. Optical signal power carrying information about all ONUs is divided into a number of portions in the ODN, and each portion of the optical signal power arrives at the ONUs through the branch optical fibers. Each ONU receives data in its own timeslot according to the corresponding identity and discards data of other timeslots.

An access mode of an uplink signal of the ONU is Time Division Multiple Access (TDMA). Each ONU sends its own uplink optical signal in a timeslot specified by the OLT. The timeslots of all ONUs are converged in the ODN and then sent to the OLT. The system ensures that no timeslot conflict occurs between the uplink optical signals of all ONUs by means of ranging and multiple access control. In order to prevent the timeslot conflict of signals, uplink optical signals of different ONUs are discontinuous in terms of time, and a lightless time interval exists between the signals. Normally, a protection interval between adjacent uplink signals of two ONUs is longer than 25 ns. A signal with the lightless time interval is referred to as a burst optical signal.

Because each ONU arrives at the ODN along different branch optical fibers, and different branch optical fibers have different distances (for example, the largest distance difference between ONUs in a Gigabit-Capable PON (GPON) is up to 20 km), the attenuation of optical power of uplink signals is also different. In addition, the transmitter in each ONU has different optical transmission power. The difference between optical powers of the uplink signals that arrive at the ODN from different ONUs may be up to 10 dB. In this way, the optical power of a signal converged by the ODN vary rapidly. As a result, burst optical signals are discontinuous not only in terms of time but also in terms of the power amplitude.

The emergence of the next generation optical access network requires the PON to be remote, that is, the optical transmission distance of a system is required to reach 100 km. The uplink signal is a burst optical signal. If an ordinary optical amplifier, for example, an optical amplifier based on the Automatic Gain Control (AGC), Automatic Current Control (ACC), Automatic Power Control (APC), and optical compensation technology, is currently used, because the response time constant of a typical transient effect of the ordinary optical amplifier is on a nanosecond scale, surge may occur after a burst optical signal is amplified by the ordinary optical amplifier, which results in signal distortion. In addition, in other non-PON optical transmission technologies, when it is necessary to amplify burst light, the same problem may occur.

### SUMMARY OF THE INVENTION

Embodiments of the present invention provide a method for amplifying a burst optical signal, a burst optical amplifier and system, and a communications system, which prevent a surge phenomenon so as to avoid signal distortion.

A method for amplifying a burst optical signal provided in an embodiment of the present invention includes:
combining, by a combiner, auxiliary light and signal light into mixed light, and outputting the mixed light, where the auxiliary light is non-burst light, the signal light is burst light, and power of the auxiliary light is set to be independent from power of the signal light;
generating pump light; and
combining, by an optical wavelength division multiplexer, the pump light with the mixed light and inputting the combined light into a gain medium, so as to obtain amplified mixed light.

A burst optical amplifier provided in an embodiment of the present invention includes:
an auxiliary light source, configured to provide auxiliary light;
a combiner, configured to combine auxiliary light provided by the auxiliary light source and signal light into mixed light and output the mixed light, where the auxiliary light is non-burst light, the signal light is burst light, and power of the auxiliary light is set to be independent from power of the signal light;
a pump source, configured to generate pump light; and
an optical wavelength division multiplexer, configured to combine pump light generated by the pump source and the mixed light output by the combiner and input the combined light into a gain medium, so as to obtain amplified mixed light.

An optical communications system provided in an embodiment of the present invention includes the burst optical amplifier, and further includes:
a transmission optical fiber, configured to transmit an optical signal;
a burst optical transmitter, configured to transmit burst light and send the burst light to the burst optical amplifier through the transmission optical fiber; and
a burst optical receiver, connected with the burst optical amplifier through the transmission optical fiber, and configured to receive the optical signal amplified by the burst optical amplifier.

A communications system provided in an embodiment of the present invention includes:
a transmission optical fiber, configured to bear transmission of an optical signal;
a burst optical transmitter, configured to transmit burst light;
a non-burst light source, configured to generate non-burst light, where power of the non-burst light is set to be independent from power of the burst light;
a combiner, configured to receive burst light that is transmitted through the transmission optical fiber and the non-burst light that is from the non-burst light source and combine the burst light and the non-burst light into mixed light;
an optical amplifier, connected with the combiner through the transmission optical fiber, and configured to receive and amplify the mixed light; and
a burst optical receiver, connected with the optical amplifier through the transmission optical fiber, and configured to receive burst light amplified by the optical amplifier.

In the above method for amplifying a burst optical signal, the burst optical amplifier, and the communications system, because the auxiliary light or non-burst light always exists, the burst optical amplifier or the optical amplifier always operates in a state of amplifying light. The pump light exists in a gain medium, and the pump light may directly amplify the entered signal light, thereby reducing the delay time when the burst optical amplifier or the optical amplifier is enabled, improving the transient response speed of the burst optical amplifier or the optical amplifier, and reducing or preventing a surge phenomenon, so as to prevent signal distortion. Power of the auxiliary light does not change with power of the signal light. Therefore, a hole-burning phenomenon is prevented.

### BRIEF DESCRIPTION OF THE DRAWINGS

FIG. 1 is a flow chart of a method for amplifying a burst optical signal according to an embodiment of the present invention;
FIG. 2 is a schematic diagram of a signal frame structure of a strong burst optical signal according to an embodiment of the present invention;
FIG. 3 is a schematic diagram of a signal frame structure of a weak burst optical signal according to an embodiment of the present invention;
FIG. 4 is a schematic diagram of a signal frame structure of a signal obtained by combining two channels of burst optical signals according to an embodiment of the present invention;
FIG. 5 is a schematic diagram of a signal frame structure of auxiliary light according to an embodiment of the present invention;
FIG. 6 is a schematic diagram of a signal frame structure of mixed light according to an embodiment of the present invention;
FIG. 7 is a schematic structure diagram of a burst optical amplifier according to an first embodiment of the present invention;
FIG. 8 is a schematic structure diagram of an optical communications system according to an embodiment of the present invention; and
FIG. 9 is a schematic structure diagram of a communications system according to an embodiment of the present invention.

### DETAILED DESCRIPTION OF THE EMBODIMENTS

The technical solutions of the present invention are hereinafter described in detail through embodiments and the accompanying drawings.

In the prior art, the response time constant of the typical transient effect of an ordinary doped optical amplifier is relatively large. When the ordinary optical amplifier amplifies burst light, a surge phenomenon may occur or the speed of enabling the optical amplifier may be too slow, resulting in transmission signal distortion. An embodiment of the present invention provides a method, where auxiliary light is added into an optical signal input to an optical amplifier, so that non-burst light always passes through the optical amplifier, thereby preventing the surge phenomenon and avoiding a phenomenon that the speed of enabling the optical amplifier is too slow. Because power of the auxiliary light is set to be independent from power of signal light, the power of the auxiliary light may be set very low, so as to avoid the influence of the hole-burning effect and meet the requirements for amplifying burst light. Furthermore, at the same time of adding the independent auxiliary light, the Automatic Gain Control (AGC) can also be performed, so as to control the gain of an optical amplifier to achieve the constant gain. Different from technologies for stabilizing gain of an optical amplifier by maintaining constant optical power of a total input signal in the existing optical compensation method, in the technical solutions of the present invention, the auxiliary light or non-burst light does not need to constantly change with the burst light, thereby preventing the generation of strong non-burst light with single-wavelength input power, so as to prevent the strong hole-burning effect and reduce restrictions on the configuration of parameters, such as a non-burst light wavelength. The supported input optical signal may be the single-wavelength input optical signal or the multi-wavelength input optical signal.

Specifically, in an embodiment of the present invention, by adding auxiliary light of certain power into input signal light entering a gain medium of an optical amplifier, power of the auxiliary light is lower than the maximum total input optical power of the optical amplifier, and the power of the auxiliary light is set to be independent from power of signal light. The auxiliary light and the signal light are combined into a total input signal of the optical amplifier. Because of the existence of the auxiliary light, the gain medium of the optical amplifier is always in a state of inputting light. Meanwhile, the optical amplifier adopts an AGC mode. Because of the existence of the auxiliary light, a situation that no light is input or a pump is off will not occur.

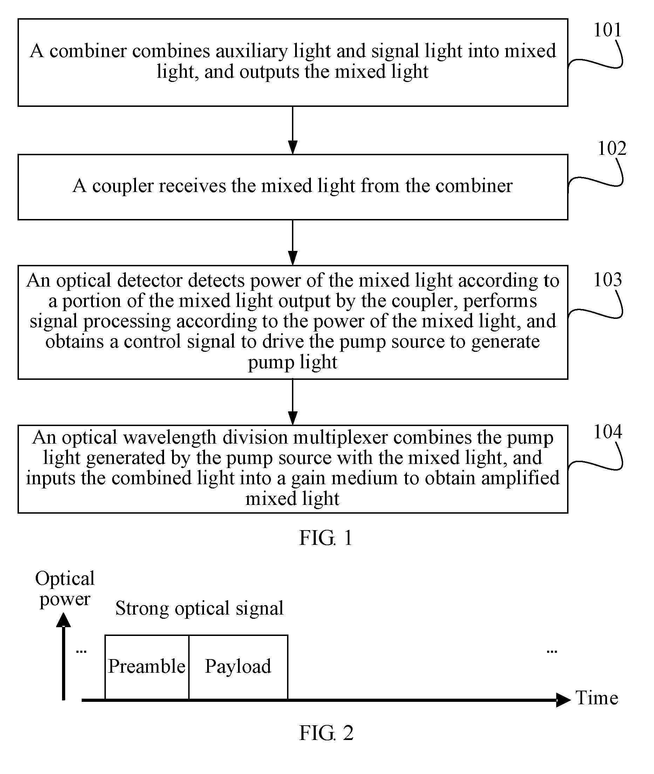

FIG. 1 is a flow chart of a method for amplifying a burst optical signal according to an embodiment of the present invention. The method includes:
Step 101: A combiner combines auxiliary light and signal light into mixed light, and outputs the mixed light.

In this embodiment, an auxiliary light source is always on and is configured to generate the auxiliary light when a system is working. The auxiliary light is non-burst light, and power of the auxiliary light is set to be independent from power of the signal light, that is, the power of the auxiliary light does not change with the power of the signal light. The wavelength of the auxiliary light is different from the wavelength of the signal light; however, both the wavelength of the auxiliary light and the wavelength of the signal light fall within an amplification wavelength scope of a gain medium. The auxiliary light and the signal light have different wavelengths, so as to avoid occupying communications wavelength resources. The auxiliary light source is always on, which indicates that the auxiliary light source always outputs light. The signal light and the auxiliary light that is from the auxiliary light source are combined into the mixed light by the combiner and then the mixed light is output. If the power of the auxiliary light is constant, power of the mixed light changes with the power of the input signal light. The signal light may be single-wavelength light or multiple-wavelength light. The auxiliary light may be continuous light without being modulated or may be modulated light. The modulated light is referred to as the auxiliary light that is obtained after certain modulation, and the auxiliary light includes: continuous-time signal light that is obtained through a modulation method and is irrelevant to a signal, and digital signal light that is obtained after signals from a channel or multiple channels are modulated onto a continuous optical carrier for transmission. The optical power of the auxiliary light remains unchanged and is lower than one half of the maximum input optical power of the amplifier.

The combiner may be a power coupler without wavelength selectivity, such as a power coupler with an optical divide ratio of 50: 50, or a wavelength multiplex combiner with wavelength selectivity.

Then, pump light may be generated and input into an optical wavelength division multiplexer for amplification. Exemplarily, a control signal is obtained according to the power of the mixed light to drive a pump source to generate the pump light, that is, the pump light is adjusted according to the power of the mixed light. In this way, the amplification of the burst signal by the optical amplifier is changed to a normal AGC mode.

Specifically, to obtain the control signal according to power of mixed light to drive the pump source to generate the pump light, the following steps may be executed:
Step 102: A coupler receives the mixed light from the combiner.
Step 103: An optical detector detects the power of the mixed light according to a portion of the mixed light output by the coupler, performs signal processing according to the power of the mixed light, and obtains the control signal to drive the pump source to generate the pump light.

An optical detector detects power of mixed light according to a small portion of the mixed light output by the coupler, and obtains a control signal to drive a pump source after an amplifier processes the signal according to the power of the mixed light.

Step 104: An optical wavelength division multiplexer combines the pump light generated by the pump source and the mixed light and inputs the combined light into a gain medium to obtain an amplified mixed light.

The power of the pump light may be directly controlled by using a current or in a Variable Optical Attenuator (VOA) manner; the gain medium may be an erbium-doped optical fiber, a praseodymium-doped optical fiber, a thulium-doped optical fiber, or a planar erbium-doped waveguide. The optical wavelength division multiplexer (WDM) combines the pump light and the mixed light and inputs the combined light into the gain medium, so as to obtain the amplified mixed light; after the auxiliary light is filtered out from the amplified mixed light at an output end of a burst optical amplifier, amplified signal light is obtained.

In addition, step 102 and step 103 are optional, that is, the pump source only needs to be capable of generating the pump light. As regards the manner for obtaining the control signal to drive the pump source, other manners may be adopted in addition to the above mentioned manners.

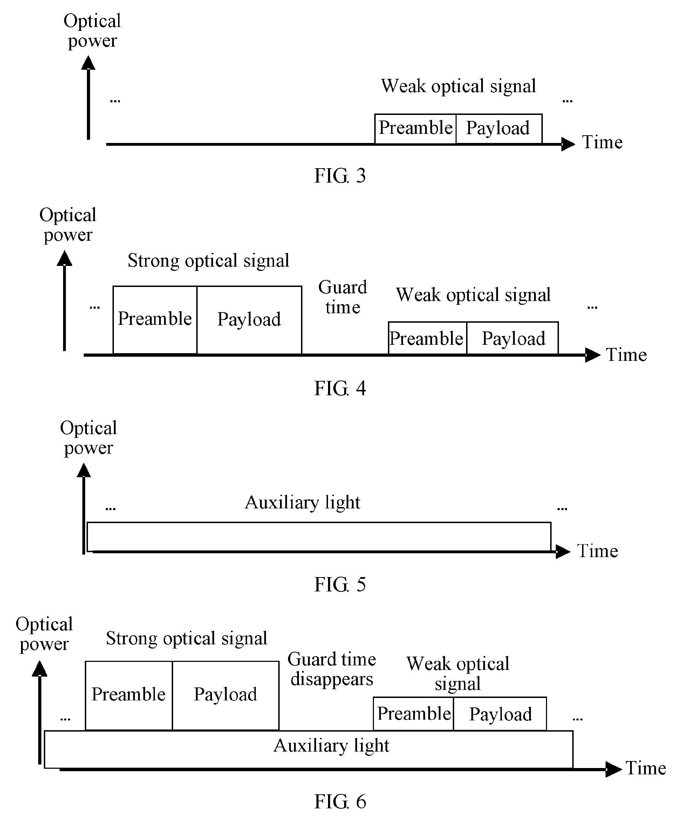

The signal light and the auxiliary light with different wavelengths enter the burst optical amplifier and are amplified. The power of the auxiliary light may not change with the power of the signal light. The power of the pump source of the burst optical amplifier is adjusted with the change of the power of the input mixed light, so as to ensure that gain of the burst optical amplifier remains basically unchanged. Because the power of the auxiliary light always exists, the optical detector may always detect that light to be amplified is input, so that the burst optical amplifier always operates in the state of amplifying light. If the input signal is burst light, during the change from a lightless state to a lighted state, because pump light which always amplifies the auxiliary light exists in the gain medium, the amplification of the burst signal by the burst optical amplifier is changed to a normal AGC mode, so as to reduce transient response time and satisfy the requirements for amplifying burst light. In the process of changing the amplification of the burst light to the normal AGC mode, the change process of the frame structure of a signal is as shown in FIG. 2 to FIG. 6. Suppose that a strong burst signal in FIG. 2 is generated by a first ONU and a weak signal in FIG. 3 is generated by a second ONU, and after passing through an ODN, the two ONU signals are converged into a signal as shown in FIG. 4. The protection interval between signals is formed by guard time and preamble time. In FIG. 5, the signal is the generated auxiliary light. FIG. 6 shows the mixed light that is generated after the auxiliary light is combined with the signal light in FIG. 4. Because of the existence of the auxiliary light, the guard time between signals is filled up by the auxiliary light, and the burst light is converted into non-burst light, so that a combined optical signal may be amplified in the normal AGC mode and burst light in the combined signal is amplified stably.

In the method for amplifying a burst optical signal, with the introduction of the auxiliary light, the guard time between signals is filled up by the auxiliary light, so that a burst signal is converted to a non-burst signal, thereby preventing the surge phenomenon, so as to effectively prevent signal distortion. In addition, the power of the auxiliary light is relatively low, so that a hole-burning phenomenon may be prevented. Exemplarily, the power of the auxiliary light is lower than or equal to one half of the set maximum input optical power. The set maximum input optical power may be the maximum input optical power of the burst optical amplifier.

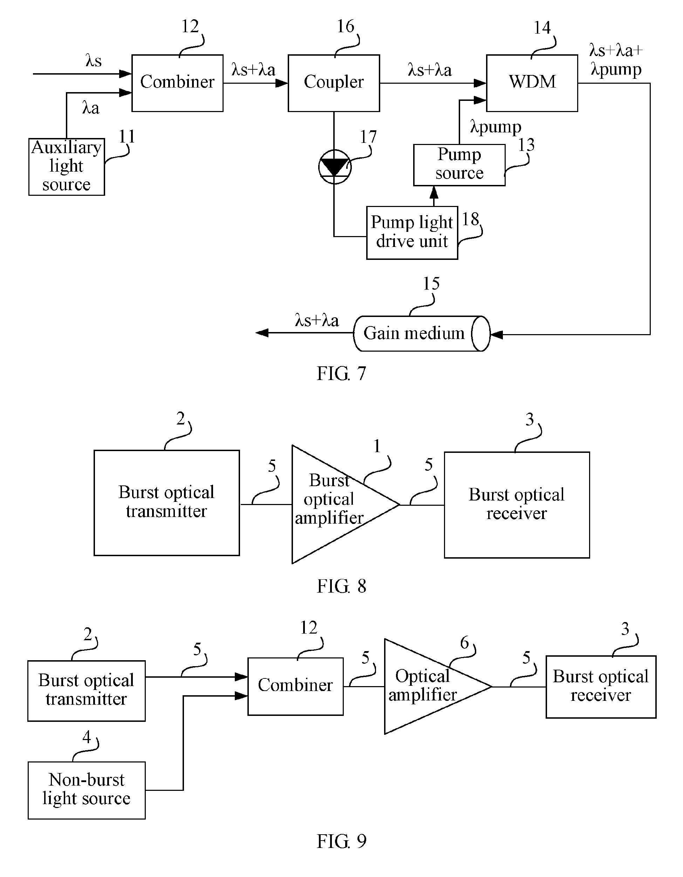

FIG. 7 is a schematic structure diagram of a burst optical amplifier according to a first embodiment of the present invention. The burst optical amplifier may support amplification of burst light. The burst optical amplifier includes: an auxiliary light source 11, configured to provide auxiliary light; a combiner 12, configured to combine the auxiliary light provided by the auxiliary light source 11 and signal light into mixed light, and output the mixed light, where the auxiliary light is non-burst light, the signal light is burst light, and power of the auxiliary light is set to be independent from power of the signal light; a pump source 13, configured to generate pump light; an optical wavelength division multiplexer (WDM) 14, configured to combine the pump light generated by the pump source 13 and the mixed light output by the combiner 12, and then input the combined light into a gain medium 15, so as to obtain amplified signal light.

The burst light may be single-wavelength light or multi-wavelength light. The auxiliary light is always on when the burst optical amplifier is working, that is, the auxiliary light is consistently provided when the amplifier is working; the auxiliary light may be continuous light without being modulated or may be modulated light. In addition, the optical power of the auxiliary light remains unchanged, and exemplarily, the optical power of the auxiliary light is lower than or equal to a half of the maximum input optical power of the burst optical amplifier. The gain medium may be set according to requirements, for example, the gain medium may be an erbium-doped optical fiber, a praseodymium-doped optical fiber, a thulium-doped optical fiber, or a planar erbium-doped waveguide.

In order to obtain a drive signal that drives the pump source 13, the burst optical amplifier may also include: a coupler 16, additionally set between the combiner 12 and the optical wavelength division multiplexer 14, and configured to receive the mixed light from the combiner 12, divide the mixed light into two portions, and output one portion to the optical wavelength division multiplexer 14; an optical detector 17, configured to receive the other portion of the mixed light output by the coupler 16 and detect the power of the mixed light according to the portion of the mixed light; and a pump light drive unit 18, configured to generate a pump source drive signal according to the power of the mixed optical, so as to drive the pump source 13. In addition, the pump light drive unit 18 may directly control the power of the pump light by using a current or in a VOA manner.

In addition, in order to filter out the amplified auxiliary light, the burst optical amplifier may also include a filter, configured to filter the mixed light amplified by the gain medium, filter out the auxiliary light from the mixed light, and obtain the amplified signal light.

Signal light with a wavelength λs is combined with auxiliary light with a wavelength λa by the combiner. λa is different from λs; however, λa and λs fall within the amplification wavelength scope of the burst optical amplifier. A small portion of the mixed light is separated by the coupler from the mixed light that is combined, and enters the optical detector. The burst optical amplifier performs signal processing to obtain a control signal according to the detected power of the mixed light, so as to drive the pump source to generate the pump light λpump. The power of the pump light λpump may be controlled directly by using a current or in a VOA manner. The pump light λpump and the mixed light are combined by the WDM, and enter the gain medium, so that the signal light is amplified.

In the burst optical amplifier, because the auxiliary light always exists, the burst optical amplifier always operates in a state of amplifying light, and the pump light exists in the gain medium, and the pump light may directly amplify the entered signal light, thereby reducing the delay time of enabling the burst optical amplifier, improving the transient response speed of the burst optical amplifier, and reducing or preventing a surge phenomenon, so as to reduce or prevent the generation of signal distortion. In addition, because the power of the auxiliary light does not change with the power of the signal light, the power of the auxiliary light does not need to be adjusted to be very high when there is no signal light, thereby preventing a hole-burning phenomenon.

FIG. 8 is a schematic structure diagram of an optical communications system according to an embodiment of the present invention. The system includes the burst optical amplifier 1 as shown in FIG. 7, and further includes: a transmission optical fiber 5, configured to transmit an optical signal; a burst optical transmitter 2, configured to transmit burst light and send the burst light to the burst optical amplifier 1 through the transmission optical fiber 5; and a burst optical receiver 3, connected with the burst optical amplifier 1 through the transmission optical fiber 5, and configured to receive an optical signal amplified by the burst optical amplifier 1.

The structure of the burst optical amplifier in this system is the same as that of the burst optical amplifier in the embodiment of the present invention, and the details are not described herein.

The burst optical transmitter transmits the signal light with a wavelength λs, and the signal light is combined with the auxiliary light with a wavelength λa by the combiner. λa is different from λs; however, λa and λs fall within the amplification wavelength scope of the burst optical amplifier. A small portion of the mixed light is separated by the coupler from the mixed light that is combined, and enters an optical detector. The burst optical amplifier performs signal processing to obtain a control signal according to the detected power of the mixed light, so as to drive the pump source. The power of the pump light may be directly controlled by using a current or in a VOA manner. The pump light and the mixed light are combined by the WDM, and enter the gain medium to obtain amplified mixed light. At an output end of the burst optical amplifier or a receiving end in the rear segment of the system, amplified signal light λs may only be output after the auxiliary light with the wavelength λa is filtered out by a filter. The burst optical receiver receives the amplified signal light λs.

In the communications system, because the auxiliary light always exists, the burst optical amplifier always operates in a state of amplifying light. The pump light exists in the gain medium, and the pump light may directly amplify the entered signal light, thereby reducing the delay time of enabling the burst optical amplifier, improving the transient response speed of the burst optical amplifier, and preventing a surge phenomenon, so as to prevent the generation of signal distortion. Therefore, the burst optical receiver may receive a correct signal.

FIG. 9 is a schematic structure diagram of a communications system according to an embodiment of the present invention. The system includes: a transmission optical fiber 5, configured to transmit an optical signal; a burst optical transmitter 2, configured to transmit burst light; a non-burst light source 4, configured to generate non-burst light, where power of the non-burst light is set to be independent from power of the burst light; a combiner 12, configured to receive the burst light that is transmitted through the transmission optical fiber 5 and the non-burst light that is from the non-burst light source 4, and combine the burst light and the non-burst light into mixed light; an optical amplifier 6, connected with the combiner 12 through the transmission optical fiber 5, and configured to receive and amplify the mixed light; and a burst optical receiver 3, connected with the optical amplifier 6 through the transmission optical fiber 5, and configured to receive the burst light amplified by the optical amplifier 6.

The burst light may be single-wavelength light or multi-wavelength light; the non-burst light source is always on when the system work is working, that is, the non-burst light always exists when the system is working, and the non-burst light is signal light being modulated or continuous light without carrying a service; the power of the non-burst light remains unchanged, and the optical power of the non-burst optical light is lower than a half of the maximum input optical power of the optical amplifier. The optical amplifier in this embodiment is a common optical amplifier with an amplifying function.

In addition, the combiner and the non-burst light source may not be located in the optical amplifier, and alternatively, either or both of the combiner and the non-burst light source may be located in the optical amplifier. When both of the combiner and the non-burst light source are located in the optical amplifier, the structure of the optical amplifier is the same as that of the burst optical amplifier in the present invention, and details are not described herein.

Furthermore, the optical amplifier can control the power of the pump light output from the pump source in the optical amplifier according to the power of the mixed light, thereby implementing a gain lock function. That is, after the amplifier amplifies the mixed light, the gain of the mixed light remains locked. At this time, the optical amplifier may specifically include the following structures: a coupler, an optical detector, a pump light drive unit, a pump source, and an optical wavelength division multiplexer. The coupler is configured to receive the mixed light from the combiner, divide the mixed light into two portions, and output one portion to the optical wavelength division multiplexer and output the other portion to the optical detector; the optical detector is configured to detect the power of the mixed light according to the portion of the mixed light that is received; the pump light drive unit is configured to generate a pump source drive signal according to the power of the mixed light; the pump source is configured to generate the pump light when being driven by the drive signal of the pump light drive unit; and the optical wavelength division multiplexer is configured to combine the pump light that is generated by the pump source with the mixed light that is output by the combiner, and input the combined light into the gain medium for amplification.

The communications system may further include a filter, connected with the optical amplifier, and configured to filter the amplified mixed light, filter out the non-burst light from the mixed light, and obtain the amplified burst light. Alternatively, the operations for filtering out the non-burst light may also be performed by the burst optical receiver.

In the communications system, because the non-burst light always exists, the optical amplifier always operates in a state of amplifying light, thereby reducing the delay time of enabling the optical amplifier, improving the transient response speed of the optical amplifier, and preventing the generation of a surge phenomenon, so as to prevent the generation of signal distortion. Therefore, the burst optical receiver can receive a correct signal.

Finally, it should be noted that the above embodiments are merely provided for describing the technical solutions of the present invention, but not intended to limit the present invention. It should be understood by persons of ordinary skill in the art that although the present invention has been described in detail with reference to the exemplary embodiments, modifications or equivalent replacements can be made to the technical solutions of the present invention without departing from scope of the technical solutions of the present invention.

## Claims

1. A method for amplifying a burst optical signal, comprising:
combining, by a combiner, auxiliary light and signal light into mixed light and outputting the mixed light, wherein the auxiliary light is non-burst light, the signal light is burst light, and power of the auxiliary light is set to be independent from power of the signal light;
generating pump light; and
combining, by an optical wavelength division multiplexer, the pump light and the mixed light, and inputting the combined light into a gain medium, so as to obtain amplified mixed light.

2. The method for amplifying a burst optical signal according to claim 1, wherein the generating the pump light comprises:
obtaining a control signal according to power of the mixed light to drive a pump source to generate the pump light.

3. The method for amplifying a burst optical signal according to claim 2, wherein the obtaining the control signal according to the power of the mixed light to drive the pump source to generate the pump light comprises:
receiving, by a coupler, the mixed light from the combiner;
detecting, by an optical detector, the power of the mixed light according to a portion of the mixed light output by the combiner, performing signal processing according to the power of the mixed light, so as to obtain the control signal to drive the pump source to generate the pump light.

4. The method for amplifying a burst optical signal according to claim 3, after the combining, by the optical wavelength division multiplexer, the pump light with the mixed light and inputting the combined light into the gain medium so as to obtain the amplified mixed light, the method further comprising:
filtering out the auxiliary light from the mixed light, so as to obtain the amplified signal light.

5. The method for amplifying a burst optical signal according to any one of claims 1-4, wherein the auxiliary light is modulated light or continuous light without being modulated.

6. The method for amplifying a burst optical signal according to any one of claims 1-4, wherein the power of the auxiliary light is lower than or equal to one half of set maximum input optical power.

7. A burst optical amplifier, comprising:
an auxiliary light source, configured to provide auxiliary light;
a combiner, configured to combine the auxiliary light provided by the auxiliary light source and signal light into mixed light and output the mixed light, wherein the auxiliary light is non-burst light, the signal light is burst light, and power of the auxiliary light is set to be independent from power of the signal light;
a pump source, configured to generate pump light; and
an optical wavelength division multiplexer, configured to combine the pump light generated by the pump source and the mixed light output by the combiner and input the combined light into a gain medium, so as to obtain amplified mixed light.

8. The burst optical amplifier according to claim 7, comprising:
a coupler, additionally set between the combiner and the optical wavelength division multiplexer, and configured to receive the mixed light from the combiner, divide the mixed light into two portions, and output one portion to the optical wavelength division multiplexer;
an optical detector, configured to receive the other portion of the mixed light output by the coupler, and detect power of the mixed light according to the portion of the mixed light; and
a pump light drive unit, configured to generate a pump source drive signal according to the power of the mixed light, so as to drive the pump source.

9. The burst optical amplifier according to claim 7 or 8, wherein:
the power of the auxiliary light output by the auxiliary light source is lower than or equal to one half of maximum input optical power of the burst optical amplifier.

10. An optical communications system comprising the burst optical amplifier according to any one of claims 7-9, further comprising:
a transmission optical fiber, configured to transmit an optical signal;
a burst optical transmitter, configured to transmit burst light and send the burst light to the burst optical amplifier through the transmission optical fiber; and
a burst optical receiver, connected with the burst optical amplifier through the transmission optical fiber, and configured to receive the optical signal amplified by the burst optical amplifier.

11. A communications system, comprising:
a transmission optical fiber, configured to transmit an optical signal;
a burst optical transmitter, configured to transmit burst light;
a non-burst light source, configured to generate non-burst light, wherein power of the non-burst light is set to be independent from power of the burst light;
a combiner, configured to receive the burst light that is transmitted through the transmission optical fiber and the non-burst light that is from the non-burst light source, and combine the burst light and the non-burst light into mixed light;
an optical amplifier, connected with the combiner through the transmission optical fiber, and configured to receive and amplify the mixed light; and
a burst optical receiver, connected with the optical amplifier through the transmission optical fiber, and configured to receive the burst light amplified by the optical amplifier.

12. The communications system according to claim 11, wherein the optical amplifier comprises:
a coupler, configured to receive the mixed light from the combiner, divide the mixed light into two portions, output one portion to an optical wavelength division multiplexer, and output the other portion to an optical detector;
the optical detector, configured to detect power of the mixed light according to the portion of the mixed light that is received;
a pump light drive unit, configured to generate a pump source drive signal according to the power of the mixed light;
a pump source, configured to generate pump light when being driven by the drive signal of the pump light drive unit; and
the optical wavelength division multiplexer, configured to combine the pump light that is generated by the pump source and the mixed light that is output by the combiner, and input the combined light into a gain medium for amplification.

13. The communications system according to claim 11 or 12, wherein:
the combiner and non-burst light source are both integrated with the optical amplifier; or
either of the combiner and the non-burst light source is integrated with the optical amplifier; or
neither of the combiner or the non-burst light source is integrated with the optical amplifier.
